# EUROPÄISCHE PATENTSCHRIFT

(11) **EP 0 672 930 B1**
(45) Veröffentlichungstag und Bekanntmachung des Hinweises auf die Patenterteilung: **28.01.1998**
(21) Anmeldenummer: 95103301.8
(22) Anmeldetag: 08.03.1995
(51) Int. Cl.: G02B 26/02, E06B 3/66

(54) **Reflektiv steuerbare Verglasungen**
Glazing having adjustable reflectance
Vitrages à réflectivité réglable

(30) Priorität: 15.03.1994 DE 4408712
(43) Veröffentlichungstag der Anmeldung: 20.09.1995
(73) Patentinhaber: DORNIER GmbH, D-88039 Friedrichshafen (DE)
(72) Erfinder: Arnold, Manfred, Dr., D-88074 Meckenbeuren (DE); Scherber, Werner, Dr., D-88697 Bermatingen (DE); Leupolz, Andreas, Dipl.-Ing., D-88213 Ravensburg (DE); Uhl, Stefan, D-70597 Stuttgart (DE); Abersfelder, Günter, Dr., D-71065 Sindelfingen (DE)

(56) Entgegenhaltungen:
- EP-A- 0 250 742
- US-A- 3 424 515

## Beschreibung

Die Erfindung betrifft eine Scheibe aus Glas oder Kunststoff, deren optischer Reflexionsgrad steuerbar ist, indem zwischen zwei verschiedenen Interferenzzuständen geschaltet wird. Damit kann die Durchlässigkeit für Sonnenstrahlung sehr effizient reduziert und eine übermäßige Aufheizung verglaster Objekte verhindert werden. Bevorzugte Anwendungen der Erfindung sind die Klimakontrolle von Kraftfahrzeugen, Schienenfahrzeugen, Flugzeugen und Gebäuden.

Um einer starken solaren Aufheizung von Gebäuden oder Fahrzeugen entgegenzuwirken, werden bisher hauptsächlich mechanische Hilfsmittel, wie z.B. Vorhänge und Rolläden, eingesetzt. Daneben sind Entwicklungen bekannt, die sich mit der steuerbaren Transmission der Scheibe selbst befassen. Transmissionsänderungen werden dabei jedoch durchgehend über eine Änderung der Absorptionseigenschaften erreicht. Dies kann einmal in einem doppelwandigen Scheibensystem durch die Zugabe von absorbierenden Flüssigkeiten oder Gasen geschehen (US-PS 1,977,477, US-PS 3,424,515). Ebenso existieren elektrochrome Scheibensysteme in Verbundglastechnik, deren Farbe und Absorption durch Anlegen einer Spannung an zwei in das System integrierte transparente Elektroden variiert werden kann (EP 0 027 855, DE 36 14 547).

Gemeinsamer Nachteil dieser Ansätze zur steuerbaren Transmission der Scheiben ist ihr absorptiver Wirkungsmechanismus. Durch die Erwärmung der absorptiven Scheibe kommt es vor allem bei länger andauernder Sonneneinstrahlung zu einer zeitlich verzögerten, indirekten Aufheizung des dahinter liegenden Raumes. Damit wird bei langen Bestrahlungszeiten die thermische Wirkung dieser Systeme gering.

Aufgabe der Erfindung ist es, ein Scheibensystem zu entwickeln, bei dem die Steuerung der Transmissionseigenschaften nicht über die Änderung des Absorptionsgrades, sondern hauptsächlich über eine Änderung des Reflexionsgrades verläuft. So wird der größte Teil der ankommenden solaren Strahlung unmittelbar reflektiert, selbst bei länger andauernder Sonneneinstrahlung bleibt die Scheibe kalt, und eine indirekte Aufheizung des dahinter liegenden Raumes wird verhindert.

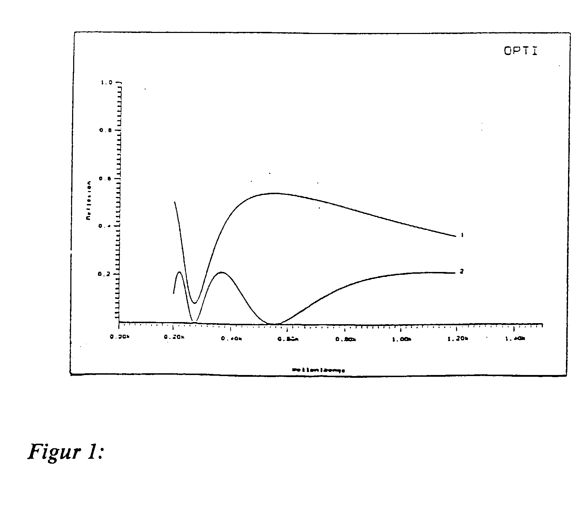

Eine zwischen den Zuständen transmittiv und reflektiv schaltbare Scheibe kann im Prinzip durch einen Interferenzansatz realisiert werden. Dazu wird das Scheibensystem, z.B. bestehend aus zwei Gläsern oder aus Glas und Folie, an den Innenseiten mit optisch transparentem, vorzugsweise hochbrechendem Material beschichtet. Die optische Schichtdicke ist dabei beispielsweise so ausgelegt, daß im Bereich des Maximums der solaren Strahlung (λₘₐₓ = 550 nm) maximale Reflexion der Einzelschichten gewährleistet ist (Bedingung: n • d = λ/4). Solange die Scheibenkomponenten und mit ihnen die innenliegenden Interferenzschichten getrennt sind, erhält man eine hohe Gesamtreflexion des Systems, da sich dann die Reflexionen der Einzelschichten näherungsweise addieren. Bringt man die Komponenten und damit auch die optischen Funktionsschichten auf Kontakt zusammen, so erhält man in der optischen Wirkung aus den beiden ursprünglichen λ/4-Schichten eine λ/2-Schicht (n • d = λ/2 als Interferenzbedingungen). Dieser Schaltzustand zeichnet sich durch minimale Reflexion und (bei geringer oder vernachlässigbarer Absorption) durch eine hohe Transmission aus. Am Beispiel einer λ/4-Schicht mit einem Brechungsindex von n = 2.5 ist in Fig. 1 der theoretische Reflexionsverlauf mit der Wellenlänge sowohl für den offenen Schaltzustand (Zustand 1: hohe Reflexion) als auch für den geschlossenen Schaltzustand (Zustand 2: geringe Reflexion) gezeigt.

Andere mögliche, reflektiv schaltbare Systeme durch Kopplung von Interferenzschichten sind ebenfalls anwendbar, z.B. λ/4 + 3/4 • λ ⇒ oder λ/6 + λ/3 ⇒ λ/2.
Der aufgezeigte schaltbare Interferenzansatz ist aus dem Bereich der thermischen Infrarot-Strahlung bekannt (EP 0 250 742). Er wird dort zur Steuerung des Emissionsvermögens und damit zur Regulierung der Wärmeabstrahlung eines Körpers genutzt. Als Anwendungsbeispiel ist die an Umgebungsbedingungen anpassbare, steuerbare Infrarot-Tarnung genannt.

Die Übertragung des im thermischen Infrarot-Bereich (λ ≈ 10 µm) verwirklichten Prinzips der zwischen transmittiv und reflektiv schaltbaren Interferenzschichten auf den Bereich optischer Wellenlängen (400 nm ≤ λ ≤ 700 nm) erscheint naheliegend, scheitert aber bei der praktischen Ausführung an der Tatsache, daß beim Schließen des Systems stets eine Restspalt zurückbleibt. Dessen Dicke bewegt sich in einer Größenordnung von 100 nm bis 200 nm und wird bei festen Systemkomponenten, wie Glas oder Kunststoff durch die Oberflächenwelligkeit, bei flexiblen Komponenten, z.B. Kunststoffolien, durch deren Eigensteifigkeit sowie durch Oberflächenrauhigkeit der beteiligten Materialien und der darauf aufgebrachten Schichten verursacht. Bei Anwendungen im thermischen Infrarot-Bereich sind die Einflüsse des Spalts sehr gering. Da die Spaltbreite deutlich unter den typischen Dicken der Interferenzschichten (d > 0.5 µm) bleibt, ist dort lediglich eine Kompensation in Form einer Anpassung der Interferenzschichtdicke notwendig. Im optischen Bereich treten typische Interferenzschichtdicken von d < 60 nm auf. Hier wird der Einfluß des Spaltes sogar dominierend und mit ein Schließen des Systems in den λ/2-Zustand hoher Transmission unmöglich.

Die Aufgabe der Erfindung wird durch den Gegenstand des Hauptanspruchs gelöst. Die Unteransprüche enthalten vorteilhafte Ausführungen der Erfindung.

Die Erfindung wird nachfolgend anhand von Figuren näher erläutert.

Es zeigen:
- Fig. 1: ein Diagramm mit dem theoretischen Reflexionsverlauf für die beiden Schaltzustände als Funktion der Wellenlänge (hohe Reflexion: 1, hohe Transmission: 2),
- Fig. 2: ein Beispiel für ein System mit schaltbarer Reflexion bestehend aus einer beschichteten Glasscheibe oder Kunststoffscheibe und einer flexiblen, beschichteten Kunststoffolie,
- Fig. 3: eine reflektiv steuerbare Doppelzellenanordnung mit zwei separaten Kammern, die alternativ belüftet und evakuiert werden können,
- Fig. 4: eine Dreikammeranordnung zur hydraulischen Steuerung der Reflexion, die im Zustand niedriger Reflexion durch die Zugabe von absorbierenden Flüssigkeiten noch zusätzlich in einen absorptiven Zustand geschaltet werden kann,
- Fig. 4.1 bis 4.3: verschiedene Schaltzustände der Dreikammeranordnung: reflektiv 4.1, transmittiv 4.2, absorptiv 4.3,
- Fig. 51 und 5.2: Darstellung einer Solarfassade in konventioneller Ausführung 5.1 und mit einer zwischen den Zuständen transmittiv und reflektiv schaltbaren Verglasung 5.2.

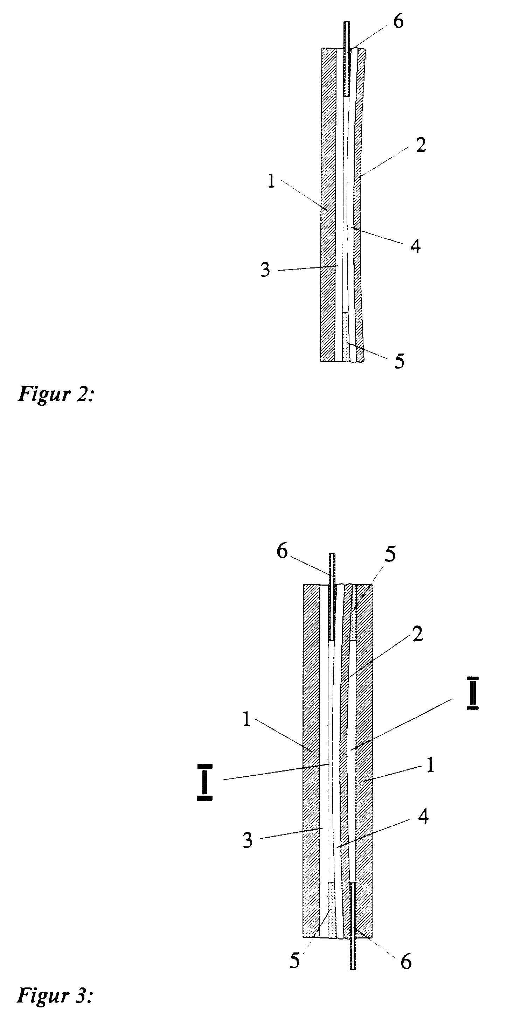

Nachfolgend wird anhand der Fig. 2 und 3 ein Scheibensystem zur Lösung der Aufgabe erläutert, bei dem gleichzeitig folgende Anforderungen erfüllt sind:
1) Das System besteht, wie in Fig. 2 gezeigt, im einfachsten Fall aus einer Glasscheibe oder Kunststoffscheibe **1** und einer transparenten Folie **2** mit hoher optischer Qualität, die beide auf der Innenseite beschichtet **3, 4** sind. Als Beschichtungsmaterial kommen vorzugsweise optisch transparente, hochbrechende Materialien, wie z.B. TiO₂, Bi₂O₃, Ta₂O₅, WO₃, Nb₂O₅, HfO₂, Si₃N₄, ITO (Indium Tin Oxide), zum Einsatz. Die Schichtdicken sind für den Wellenlängenbereich der maximalen Strahlungsintensität des Sonnenspektrums (λ ≈ 550 nm) als λ/4-Schichten ausgelegt. In einer bevorzugten Ausführungsform kann das System pneumatisch gesteuert werden. Dazu sind beide Komponenten am Rand miteinander vakuumdicht verklebt **5**. Der Innenraum wird über Sauganschlüsse **6** evakuiert oder belüftet und so zwischen den Zuständen hoher Transmission (Zelle geschlossen) und hoher Reflexion (Zelle offen) geschaltet. Zur Steigerung des Reflexionsschalthubes kann das dargestellte λ/4-λ/2-Schaltprinzip zweimal in Serie angeordnet werden. Dazu sind innerhalb der beiden Außenscheiben eines Doppelscheibensystems zwei hochflexible Folien beweglich angeordnet. Jeweils die Seiten der Folien, die den Außenscheiben gegenüberliegen, sind mit einer Interferenzschicht versehen. Die Innenseiten der Außenscheiben sind ebenfalls mit einer Interferenzschicht versehen.
2) Die eingesetzte Folie zeichnet sich durch extrem hohe Flexibilität und sehr geringer Oberflächenrauhigkeit aus. Vorzugsweise wird hochflexible PU (Polyurethan) - Folie, Folie mit ähnlich guter Flexibilität [z.B. PVB (Polyvinylbuthyral), PC Polycarbonat), PVC (Polyvinylchlorid), ASA (Acrylnitril-Styrol-Acrylester), PA (Polyamid), CA (Celluloseacetat) oder Polysiloxan] oder ein flexibler Folienverbund aus zwei oder mehreren Kunststofffolien verwendet. Die hohe Flexibilität, verbunden mit den guten Fließeigenschaften der Folie, garantiert ein optimales Schließen des Systems bis zu geringsten Restspaltdicken, die sich im Bereich von 15 nm < d < 30 nm bewegen und vorwiegend durch Oberflächenrauhigkeiten bestimmt sind. Derartige minimale Restspalte fallen für das optische Verhalten fast nicht ins Gewicht und ermöglichen so erst die Realisierung des geschlossenen Schaltzustands mit hoher Transmission.
3) Eine weitere vorteilhafte Ausführung des Systems besteht in einer Doppelzellenanordnung des Systems (Fig. 3). Diese besteht aus zwei getrennten äußeren Scheiben aus Glas oder Kunststoff **1**. Ähnlich einer Verbundglasanordnung ist in der Mitte die hochflexible PU-Folie **2** eingespannt und zu beiden Scheiben hin am Rand vakuumdicht verklebt **5**. So existieren zwischen Folie und Scheiben zwei separate, jeweils über Sauganschlüsse evakuierbare Zwischenräume I, II. In einem dieser Bereiche sind Glas und Folie auf der Innenseite beschichtet **3, 4**. Das Öffnen des Systems in den reflektierenden λ/4-Zustand erfolgt dabei durch Evakuieren des rückseitigen Zusatzvolumens II sowie anschließendem Belüften der Interferenzzelle I. Umgekehrt erfolgt das Schließen in den Zustand hoher Transmission nach einem Evakuieren des Volumens I und einer folgenden Belüftung der Rückseite II. Diese Ausführung hat den zusätzlichen Vorteil, daß beim Evakuieren Abschnürungen, die durch die hohe Flexibilität der eingesetzten Folie verursacht werden, und damit lange Pumpzeiten, das heißt lange Schaltzeiten des Systems, wie sie in einer Ausführung nach 1) auftreten können, vermieden werden.
4) Ebenso vorteilhaft ist auf der Folienseite der Ersatz der in 1) erwähnten keramischen Schichten durch Materialien mit duktilem Charakter. Besonders geeignet sind hierfür interferenzmäßig angepaßte, hochbrechende Polymerschichten. Derartige Polymerschichten können z.B. durch Mischen von organischen und anorganischen Komponenten hergestellt werden, z.B. durch Sol-Gel-Verfahren oder auch durch CVD-ähnliche Plasmapolymerisationsprozesse. In Ergänzung zu einer rein Interferenzauslegung ist auch der Einsatz von dünnen, transparenten Metallschichten möglich. Vorzugsweise kommen edle Metalle, wie z.B. Au, AG, Pt, Ir, sowie Metalle mit einem einer λ/4-Auslegung entsprechenden Dispersionsverlauf, wie z.B. Cr oder Os, zur Verwendung. Der entscheidende Vorteil von Schichten mit duktilen Eigenschaften liegt in der Tatsache, daß sie in der Lage sind, die starken Ausdehnungen der hochflexiblen PU-Folie beim Schaltvorgang besser zu übersetzen.

Eine weitere Ausführungsform der Erfindung besteht in der Möglichkeit der Kombination mit absorptiven Maßnahmen. Dadurch wird erstmals eine Verglasung realisierbar, die wahlweise zwischen den drei Zuständen transmittiv, reflektiv und absorptiv geschaltet werden kann. Im einfachsten Fall erreicht man diese Eigenschaften durch serielle Aneinderreihung, z.B. in einem Drei-Scheibenverbund, eines zwischen den Zuständen transmittiv und reflektiv schaltenden Systems mit einer zwischen transmittiv und absorptiv schaltenden Einheit [auf der Basis von absorbierenden Flüssigkeiten oder auf der Grundlage von elektrochromen Systemen]. Neben den Grundzuständen transmittiv, absorptiv, reflektiv werden auch gemischte Zustände realisierbar. Ein typisches Beispiel stellt der simultane Zustand von reflektiv und absorptiv dar. Hier wird das Sonnenlicht im zwischen transmittiv und reflektiv schaltenden System zunächst reflektiert, und zwar zu dem Prozentsatz, auf den die maximale Reflexion des Systems eingestellt ist. Der durchgehende Rest kann in der transmittiv oder absorptiv wirkenden Einheit absorbiert werden, und so der thermische Wirkungsgrad weiter gesteigert werden.

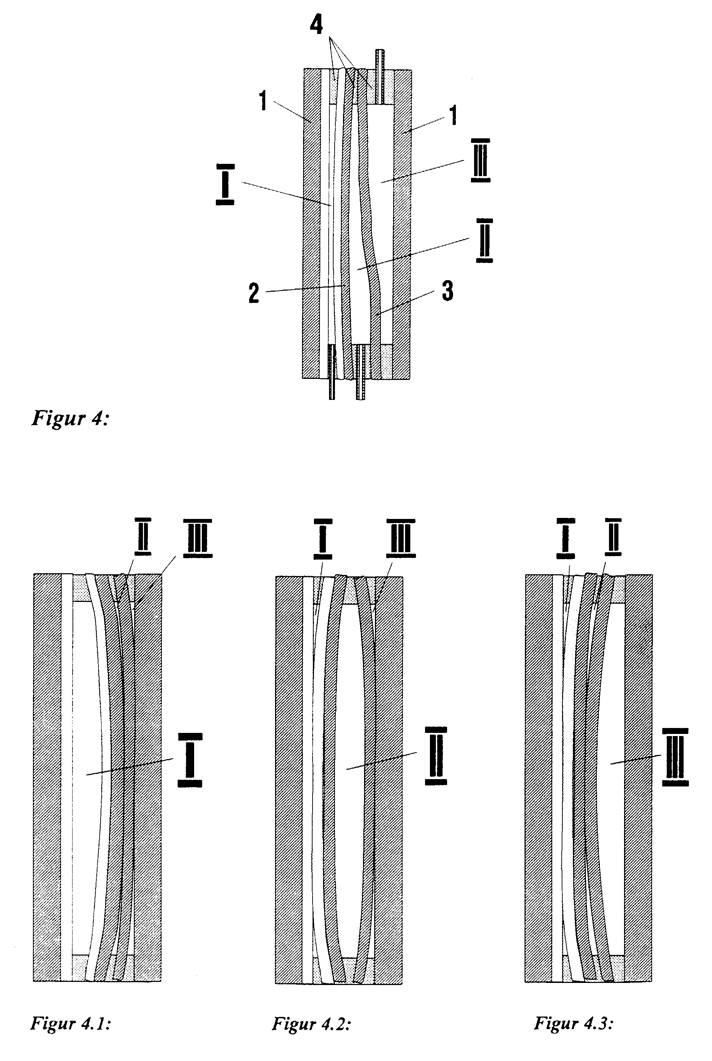

Eine spezielle Ausführung einer zwischen den Zuständen transmittiv, absorptiv und reflektiv schaltbaren Verglasung soll anhand von Fig. 4 beschrieben werden: 5) Das Syste
m besteht aus zwei Scheiben **1** und ist durch zwei weitere Trennfolien **2, 3** in insgesamt drei Kammern unterteilt. Kammer I entspricht einer zwischen transmittiv und reflektiv schaltbaren Zelle nach Ausführung 1), mit hochflexibler Folie **2** als Abtrennung zu Kammer **II** hin. Die Bereiche **II** und **III** sind ebenfalls durch eine flexible Folie **3** voneinander getrennt und am Rand abgedichtet **4**. Diese flexible Folie **3** ist transparent sowie gasdicht und flüssigkeitsdicht. Sie muß jedoch nicht notwendigerweise die hohe Flexibilität der Folie **2** aufweisen. Geeignete Materialien für die flexible Folie **3** ist z.B. PU, PET, PTFE. Diese beiden Kammern können wahlweise mit Flüssigkeit gefüllt werden. Im reflektiven Zustand ist die Flüssigkeit bis auf einen sehr dünnen, von der optischen Wirkung her unbedeutenden Flüssigkeitsfilm aus den Kammern **II** und **III** entfernt, die Interferenz **I** ist belüftet (Fig. 4.1). Der transmittive oder absorptive Zustand wird dadurch erreicht, daß Volumen **I** evakuiert und auf die rückseitige, hochflexible PU-Folie Druck ausgeübt wird, wodurch die ursprünglich getrennten λ/4-Schichten in einen λ/2-Zustand minimaler Reflexion überführt werden. Ergänzend zu den Ausführungen 1) bis 3) kann der Druck auch hydrostatisch durch Einfüllen einer Flüssigkeit erzeugt werden. Einmal wird dabei beispielsweise Volumen **II** mit einer hochtransparenten Flüssigkeit gefüllt, wobei Kammer **III** simultan leer bleibt (Fig. 4.2). Dies repräsentiert den transmittiven Zustand des Gesamtsystems. Alternativ wird aus Volumen **II** die transparente Flüssigkeit entfernt, und Volumen **III** wird mit einer absorbierenden Flüssigkeit gefüllt. Wie Fig. 4.3 zu entnehmen ist, wird auch hier ein hydrostatischer Druck auf die Interferenzzelle **I** ausgeübt. Diese Konfiguration beschreibt den absorptiven Zustand des Gesamtsystems. Wählt man anstelle einer transparenten und einer absorbierenden Flüssigkeit zwei Flüssigkeiten mit unterschiedlicher Farbe oder unterschiedlichem Absorptionsgrad, so können mit diesem System neben einem reflektiven auch zwei Zustände unterschiedlicher Einfärbung oder Absorption dargestellt werden.

Eine bevorzugte Anwendungsmöglichkeit von zwischen transmittiv und reflektiv schaltbaren Scheiben ist der Einsatz im Kraftfahrzeug. Hier können derartige Scheiben eine entscheidende Komfortsteigerung bei der Thermalkontrolle des Fahrzeugs leisten. Ein den Fahrzeugkomfort stark mindernder Umstand ist die Tatsache, daß sich geparkte Fahrzeuge bei Sonneneinstrahlung im Fahrzeuginnern stark aufheizen. Diese Aufheizung erfolgt vorwiegend durch Wärmeeintrag über die transparenten Scheiben. Deshalb sind an dieser Stelle Mechanismen gefragt, die die Transmission des Sonnenlichts ins Fahrzeuginnere unterbinden. Neben mechanischen Hilfsmitteln (z.B. Rollos) sind zwischen transmittiv und absorptiv schaltbare Scheibensysteme, wie EC-Elemente oder Scheiben mit absorbierender Flüssigkeit, denkbar. Deren thermische Wirkung kommt allerdings nur bei kurzzeitigem Parken zur Geltung. Bei längerer Sonneneinstrahlung heizen sich sich die im geparkten Zustand absorptiven Scheiben selbst stark auf und geben ihre Wärme über Wärmestrahlung und Konvektion an den Innenraum weiter. Indirekt wird dadurch, wenn auch mit einer gewissen zeitlichen Verzögerung, das Fahrzeuginnere ähnlich stark aufgeheizt wie ohne Scheibenmaßnahme. Wesentlich effizienter arbeiten in dieser Situation reflektiv wirkende Verglasungen. Schon bei einer Reflexion von lediglich 60 % werden deutlich geringere Innenraumtemperaturen und damit ein erheblicher Komfortgewinn bei Fahrtantritt erzielt. Da im Fahrbetrieb erhöhte Scheibenreflexionen aus Sicherheitsgründen nicht zulässig sind, kommen für diese Kraftfahrzeug (KfZ)-Anwendung nur Scheibensysteme mit schaltbarer Reflexion in Betracht. Thermischer Komfort während der Fahrt, wie die Beseitigung von störender, direkter Sonneneinstrahlung auf die Insassen kann durch eine zusätzliche absorptive Maßnahme, z.B. über die vorher erwähnte transmittiv oder absorptiv oder reflektiv wirkende Scheibensteuerung, erreicht werden.

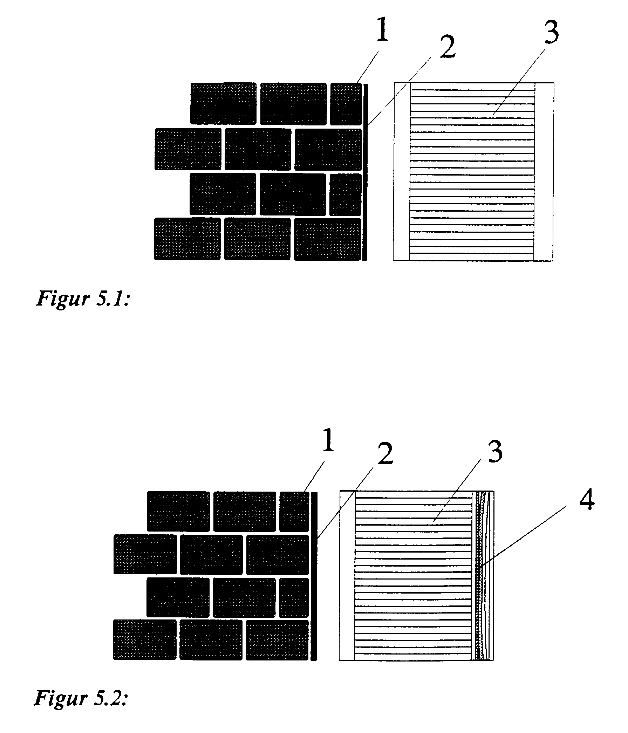

Ein weiteres, umfangreiches Anwendungsfeld von zwischen den Zuständen transmittiv und reflektiv schaltbaren Scheiben ergibt sich bei der Thermalkontrolle von Gebäuden. Einmal sind bei der Gebäudeverglasung zum Schutz gegen starke Sonneneinstrahlung zwischen den Zuständen transmittiv und reflektiv schaltbare Scheiben als Ersatz für Jalousien und andere mechanische Hilfsmittel denkbar. Vor allem aber können sie eine wertvolle Komponente bei der Verwirklichung von energiesparenden Heizkonzepten durch zusätzliche Nutzung der Sonnenenergie darstellen, z.B. durch ihre Integration in ein Solarfassadenkonzept, das anhand von Fig. 5.1 erläutert werden soll. Mit einer Solarfassade soll im Winter die eingestrahlte solare Energie zur Heizung des Gebäudes mitgenutzt werden. Dazu ist es notwendig, daß die von den absorbierenden Oberflächen **2** der Gebäudewände **1** aufgenommene solare Energie nicht an die äußere Umgebung abgegeben werden kann, sondern über Wärmeleitung des Mauerwerks **1** ins Gebäudeinnere gelangt. Vorzugsweise werden hierfür massive Baumaterialien, wie Kalksandstein verwendet. Um Wärmeverluste nach außen gering zu halten, wird eine zusätzliche transparente Isolation eingesetzt. Diese Funktion übernimmt ein der Wand vorgebautes doppelwandiges Isolierglassystem mit integrierter, optisch transparenter Wärmedämmung in Kapillar- oder Wabenform **3**. Durch diesen Aufbau kann das Sonnenlicht nahezu ungestört bis zum Mauerwerk vordringen und dort absorbiert werden. Eine Abgabe der dort entstehenden Wärme nach außen wird durch die transparente Dämmung stark reduziert. Während ein solcher Solarfassadenaufbau im Winter durch die Nutzung der solaren Energie wunschgemäß arbeitet, führt er im Sommer durch die fehlende Isolationswirkung des Mauerwerks zu einer unerwünschten Aufheizung der Innenräume. Als Gegenmaßnahme werden bisher hauptsächlich mechanische Hilfsmittel, wie z.B. Jalousien, eingesetzt, die hinter der Frontscheibe montiert sind. Ihre Zuverlässigkeit ist jedoch sehr begrenzt. Eine zuverlässigere, erfindunggemäße Lösung ist eine zwischen den Zuständen transmittiv und reflektiv schaltbare Außenscheibe **4** der transparenten Wärmedämmung, wie sie in Fig. 5.2 gezeigt ist. Im Sommerbetrieb wird hier in reflektiver Stellung die solare Strahlung unmittelbar an der Oberfläche reflektiert und kann somit auch indirekt nicht zu einem Wärmeeintrag führen. Um störende visuelle Blendeffekte durch direkte Reflexion zu vermeiden, kann die zwischen den Zuständen transmittiv und reflektiv schaltbare Frontscheibe der Fassade auf der Außenseite z.B. als Milchglas mit stark streuendem Charakter ausgeführt sein.

## Patentansprüche

1. Doppelscheibe aus Glas oder Kunststoff mit steuerbarem Reflexionsgrad zur Regelung des Eintrags von Sonnenlicht und Sonnenwärme in Fahrzeuge oder Gebäude, mit mindestens zwei Interferenzschichten (3, 4), die getrennt oder zusammengebracht werden können und die im getrennten Zustand beide reflektierend sind aber im zusammengebrachten Zustand eine einzige lichtdurchlässige Schicht bilden, wobei mindestens eine Interferenzschicht (3) auf einer Innenseite der Doppelscheibe angeordnet ist, **dadurch gekennzeichnet,** daß
- mindestens eine der Interferenzschichten (4) auf einer innerhalb der Doppelscheibe bewegbaren, transparenten Folie (2) angeordnet ist,
- wobei die bewegbare, transparente Folie (2) hochflexibel ist und eine geringe Oberflächenrauhigkeit aufweist, so daß der Restspalt zwischen den Interferenzschichten im zusammengebrachten Zustand kleiner als 100 nm ist.

2. Doppelscheibe nach Anspruch 1, **dadurch gekennzeichnet,** daß die hochflexible Folie aus PU, PVB, PC, PVC, ASA, PA, CA oder einem flexiblen Folienverbund aus zwei oder mehreren Kunststoffolien besteht.

3. Doppelscheibe nach einem der vorangehenden Ansprüche, **dadurch gekennzeichnet,** daß eine Seite der hochflexiblen Folie und/oder die Innenseite der ihr gegenüberliegenden Außenscheibe mit mindestens einer λ/4-Schicht als Interferenzsschicht versehen ist.

4. Doppelscheibe nach einem der vorangehenden Ansprüche, **dadurch gekennzeichnet,** daß zwei hochflexible Folien vorhanden sind, wobei jeweils die den Außenscheiben zugewandten Seiten der beiden hochflexiblen Folien und/oder die jeweils gegenüberliegenden Außenscheiben mit mindestens einer Interferenzschicht versehen sind.

5. Doppelscheibe nach Anspruch 4, **dadurch gekennzeichnet,** daß die Interferenzschicht eine λ/4-Schicht ist.

6. Doppelscheibe nach einer der vorangehenden Ansprüche, **dadurch gekennzeichnet,** daß anstelle einzelner Interferenzschichten jeweils ein Schichtpaket von mehreren Interferenzschichten verwendet wird.

7. Doppelscheibe nach einer der vorangehenden Ansprüche, **dadurch gekennzeichnet,** daß die Interferenzschichten aus transparenten, hochbrechenden Materialien bestehen.

8. Doppelscheibe nach Anspruch 7, **dadurch gekennzeichnet,** daß die Interferenzschichten aus TiO₂ bestehen.

9. Doppelscheibe nach einem der vorangehenden Ansprüche, **dadurch gekennzeichnet,** daß auf die hochflexible Folie anstelle oder zusätzlich zu der Interferenzschicht eine dünne, transparente Schicht aus Metall oder eine hochbrechende, transparente Polymerschicht angeordnet ist, die jeweils duktile Eigenschaften aufweisen.

10. Doppelscheibe nach einem der vorangehenden Ansprüche, **dadurch gekennzeichnet,** daß die hochflexible Folie durch pneumatische und/oder hydraulische Kräfte bewegbar ist.

11. Doppelscheibe nach einem der vorangehenden Ansprüche, **dadurch gekennzeichnet,** daß durch die erste der beiden Außenscheiben sowie der hochflexiblen Folie eine erste Kammer gebildet ist, und durch die zweite der beiden Außenscheiben und der hochflexiblen Folie eine zweite Kammer gebildet ist, wobei eine Vorrichtung vorhanden ist, mit dem mindestens eine der beiden Kammern mit einem flüssigen oder gasförmigen Medium befüllt und evakuiert werden kann.

12. Doppelscheibe nach einem der vorangehenden Ansprüche, **dadurch gekennzeichnet,** daß innerhalb der beiden Außenscheiben neben der hochflexiblen Folie eine weitere Folie vorhanden ist, so daß zwischen der ersten Außenscheibe und der hochflexiblen Folie eine erste Kammer gebildet ist, zwischen der hochflexiblen Folie und der weiteren Folie eine zweite Kammer gebildet ist, und zwischen der weiteren Folie und der zweiten Außenscheibe eine dritte Kammer gebildet ist, wobei Vorrichtungen vorhanden sind, mit denen die Kammern wahlweise mit transparenten oder absorbierenden Medien befüllt und evakuiert werden können

## Claims

1. Double pane of glass or plastics material having a controllable reflection factor for regulating the entry of sunlight and solar heat into vehicles or buildings, having at least two interference layers (3, 4) which can be separated or brought together and which in the separated state are both reflective but in the brought-together state form a single transparent layer, at least one interference layer (3) being arranged on an inner side of the double pane, characterized in that
- at least one of the interference layers (4) is arranged on a transparent film (2) movable inside the double pane,
- the movable transparent film (2) being highly flexible and having a slight surface roughness so that the residual gap between the interference layers in the brought-together state is less than 100 nm.

2. Double pane according to claim 1, characterized in that the highly flexible film consists of PU, PVB, PC, PVC, ASA, PA, CA or a flexible film laminate of two or more plastics films.

3. Double pane according to any one of the preceding claims, characterized in that one side of the highly flexible film and/or the inner side of the outer pane lying opposite to it, is provided with at least one λ/4 layer as interference layer.

4. Double pane according to any one of the preceding claims, characterized in that two highly flexible films are present, the sides of the two highly flexible films that face the respective outer panes, and/or the respective outer panes that lie opposite, being provided with at least one interference layer.

5. Double pane according to claim 4, characterized in that the interference layer is a λ/4 layer.

6. Double pane according to any one of the preceding claims, characterized in that instead of individual interference layers, a laminated assembly of several interference layers is used

7. Double pane according to any one of the preceding claims, characterized in that the interference layers consist of transparent highly refractive materials.

8. Double pane according to claim 7, characterized in that the interference layers consist of TiO₂.

9. Double pane according to any one of the preceding claims, characterized in that on the highly flexible film there is arranged instead of or in addition to the interference layer a thin transparent layer of metal or a highly refractive, transparent polymer layer, each of which has ductile properties.

10. Double pane according to any one of the preceding claims, characterized in that the highly flexible film is movable by pneumatic and/or hydraulic forces.

11. Double pane according to any one of the preceding claims, characterized in that the first of the two outer panes and the highly flexible film form a first cavity, and the second of the two outer panes and the highly flexible film form a second cavity, a device being present by means of which a liquid or gaseous medium can be introduced into or evacuated from at least one of the two cavities.

12. Double pane according to any one of the preceding claims, characterized in that inside the two outer panes next to the highly flexible film there is a further film so that a first cavity is formed between the first outer pane and the highly flexible film, a second cavity is formed between the highly flexible film and the further film, and a third cavity is formed between the further film and the second outer pane, devices being present by means of which transparent or absorbing media can be introduced into and evacuated from the cavities as desired.

## Revendications

1. Double vitrage en verre ou en matière plastique à degré de réflexion réglable pour réguler l'entrée de lumière solaire et de chaleur solaire dans des véhicules ou des bâtiments, comprenant au moins deux couches interférentes (3,4) qui peuvent être séparées ou réunies et qui, à l'état séparé, sont toutes deux réfléchissantes et, à l'état réuni, forment une couche unique perméable à la lumière, au moins l'une des couches interférentes, (3), se trouvant sur la face intérieure du double vitrage, caractérisé en ce qu'au moins l'une des couches interférentes (4) est disposée sur une feuille transparente (2) déplaçable à l'intérieur du double vitrage, la feuille transparente mobile (2) étant très flexible et présentant une rugosité superficielle faible, de sorte que l'interstice résiduel entre les couches interférentes est inférieur à 100 nm lorsqu'elles sont réunies.

2. Double vitrage selon la revendication 1, caractérisé en ce que la feuille très flexible est réalisée en PU, PVB, PC, PVC, ASA, PA, CA ou en un composite à feuilles flexibles constitué de deux ou plusieurs feuilles en matière plastique.

3. Double vitrage selon une des revendications précédentes, caractérisé en ce que l'une des faces de la feuille très flexible et/ou la face intérieure de la vitre extérieure tournée vers elle est garnie d'au moins une couche quart d'onde faisant fonction de couche interférente.

4. Double vitrage selon une des revendications précédentes, caractérisé en ce qu'il est prévu deux feuilles très flexibles, la face des deux feuilles très flexibles tournée vers la vitre extérieure et/ou les vitres extérieures tournées vers elles sont garnies d'au moins une couche interférente.

5. Double vitrage selon la revendication 4, caractérisé en ce que la couche interférente est une couche quart d'onde.

6. Double vitrage selon une des revendications précédentes, caractérisé en ce qu'un paquet de plusieurs couches interférentes est utilisé à la place de couches interférentes individuelles.

7. Double vitrage selon une des revendications précédentes, caractérisé en ce que les couches interférentes sont réalisées en des matériaux transparents à haut pouvoir réfringent.

8. Double vitrage selon la revendication 7, caractérisé en ce que les couches interférentes sont en TiO₂.

9. Double vitrage selon une des revendications précédentes, caractérisé en ce que, sur la feuille très flexible, est disposée, en remplacement ou en complément de la couche interférente, une couche transparente mince en métal ou une couche en polymère transparent à haut pouvoir réfringent qui présentent chacune des propriétés de ductilité.

10. Double vitrage selon une des revendications précédentes, caractérisé en ce que la feuille très flexible peut être déplacée par des forces pneumatiques et/ou hydrauliques.

11. Double vitrage selon une des revendications précédentes, caractérisé en ce que la première des deux vitres extérieures ainsi que la feuille très flexible forment une première chambre, et la seconde des deux vitres extérieures et la feuille très flexible forment une seconde chambre, un dispositif étant prévu pour pouvoir emplir au moins l'une des deux chambres d'un agent liquide ou gazeux et la mettre sous vide.

12. Double vitrage selon une des revendications précédentes, caractérisé en ce qu'une feuille supplémentaire est prévue à l'intérieur des deux vitres extérieures à côté de la feuille très flexible, de sorte qu'une première chambre est formée entre la première vitre extérieure et la feuille très flexible, une seconde chambre est formée entre la feuille très flexible et la feuille supplémentaire, et une troisième chambre est formée entre la feuille supplémentaire et la seconde vitre extérieure, des dispositifs étant prévus pour pouvoir emplir au choix les chambres d'agents transparents ou absorbants et les mettre sous vide.
